# EUROPÄISCHE PATENTANMELDUNG

(11) **EP 0 532 888 A2**
(43) Veröffentlichungstag der Anmeldung: **24.03.1993**
(21) Anmeldenummer: 92113362.5
(22) Anmeldetag: 05.08.1992
(51) Int. Cl.: F16L 5/02, H02G 3/22, A62C 2/06

(54) **Vorrichtung zur Brandabschottung einer Wandöffnung für die Durchführung von Leitungen**

(30) Priorität: 19.09.1991 DE 4131149
(71) Anmelder: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(57) **Zusammenfassung**

Die Vorrichtung umfaßt einen abgedichtet gegen die Wand (3) in der Wandöffnung (2) angeordneten, die Leitungen (1) in einer Durchführungsöffnung (7) aufnehmenden Schottkasten (4), in dem sich ein Inumeszenzmaterial (20) befindet, das die Durchführungsöffnung (7) erst im Brandfall ausfüllt und dabei sein ursprüngliches Volumen infolge von Wärmeeinwirkung entsprechend vergrößert. Der Schottkasten (4) bildet oberhalb der Durchführungsöffnung (7) ein Behältnis (19), welches Intumeszenzmaterial (20) von schütt- oder rieselfähiger Beschaffenheit enthält. Der die Durchführungsöffnung (7) nach oben begrenzende Boden (21) des Behältnisses (19) öffnet sich im Brandfall und läßt das Intumeszenzmaterial in die Durchführungsöffnung (7) austreten, wobei die Öffnung des Bodens (21) schon bei niedrigerer Temperatur als die Volumenvergrößerung des Intumeszenzmaterials (20) erfolgt.

## Beschreibung

Die Erfindung betrifft eine Vorrichtung zur Brandabschottung einer Wandöffnung für die Durchführung von Leitungen, wie elektrische Kabel, Rohre oder dergl., durch eine Wand, mit einem abgedichtet gegen die Wand in der Wandöffnung angeordneten, die Leitungen in einer Durchführungsöffnung aufnehmenden Schottkasten, in dem sich ein Intumeszenzmaterial befindet, das die Durchführungsöffnung erst im Brandfall ausfüllt und dabei sein ursprüngliches Volumen infolge von Wärmeeinwirkung entsprechend vergrößert.

Vorrichtungen dieser Art besitzen den Vorteil, daß sich die Durchführungsöffnung erst im Brandfall schließt, vorher aber immer offen ist, und daß daher Änderungen oder Ergänzungen in der Leitungsbelegung der Durchführungsöffnung ohne Bohr- oder Stemmarbeiten an der Wand oder am Schottkasten vorgenommen werden können.

Bei bekannten Vorrichtungen dieser Art (vgl. beispielsweise die Firmendruckschrift der Asea Brown Boveri AG "Schottung von Wand- und Deckendurchbrüchen", ABB - ZST 31 (12.88 1000 HD) Seite 5) ist der Schottkasten ein auf beiden Seiten der Wand offener Stahlblechkasten, dessen Wände innenseitig mit aus dem Intumeszenzmaterial bestehenden Blöcken, nämlich luftdicht gekapselten PALUSOL-Blöcken, ausgekleidet sind, die zwischen sich die Durchführungsöffnung bilden. Stirnseitig befinden sich am Schottkasten Polystyrol-Kappen, die mit passenden Öffnungen für die einzelnen Leitungen versehen und mit einem geeigneten dauerelastischen Dichtstoff gegen den Schottkasten und gegen die Leitungen verfugt werden müssen. Unter Wärmeeinwirkung im Brandfall schäumt das Intumeszenzmaterial auf und verschließt dadurch die nach der Leitungsbelegung noch frei gebliebenen Teile der Durchführungsöffnung. Die Polystyrol-Kappen entfalten im Brandfall keine nennenswerte Brandschutzwirkung; sie dienen nur zum zug- und rauchdichten Verschluß der Durchführungsöffnung, so lange diese vor einem Brandfall durch das Intumeszenzmaterial noch nicht verschlossen ist.

Der Einsatzbereich dieser bekannten Vorrichtungen ist beschränkt. Der Schottkasten kann im Innenmaß seines Querschnitts nicht nennenswert größer als etwa 70 x 240 mm sein, weil sonst die Menge des Intumeszenzmaterials, die im Schottkasten untergebracht werden kann, nicht ausreichen würde, im Brandfall die Durchführungsöffnung wirklich zuverlässig zu schließen. Weiter besteht keine Möglichkeit, mit den Leitungen auch eine Leitungspritsche durch den Schottkasten hindurchzuführen, ohne im Brandfall den wirksamen Verschluß der Durchführungsöffnung zu gefährden. Und schließlich ist das Anpassen und Verfugen der Polystyrol-Kappen umständlich und zeitaufwendig, zumal da diese Arbeiten bei jeder Änderung der Leitungsbelegung aufs neue vorgenommen werden müssen.

Der Erfindung liegt die Aufgabe zugrunde, eine Vorrichtung der eingangs genannten Art so auszubilden, daß auch bei größeren und großen Querschnittsinnenmaßen der Durchführungsöffnung genügende Mengen an Intumeszenzmaterial zur Verfügung stehen, um im Brandfall den sicheren Verschluß der Durchführungsöffnung zu gewährleisten, und zwar auch, wenn mit den Leitungen eine sie tragende Leitungspritsche die Durchführungsöffnung durchsetzt.

Diese Aufgabe wird nach der Erfindung dadurch gelöst, daß der Schottkasten ein oberhalb der Durchführungsöffnung angeordnetes Behältnis bildet, welches aus Feststoff bestehendes Intumeszenzmaterial von schütt- oder rieselfähiger Beschaffenheit enthält, und daß der die Durchführungsöffnung nach oben begrenzende Boden des Behältnisses sich im Brandfall öffnet und das Intumeszenzmaterial in die Durchführungsöffnung austreten läßt, wobei die Öffnung des Bodens schon bei niedrigerer Temperatur als die Volumenvergrößerung des Intumeszenzmaterials erfolgt.

Im Ergebnis beinhaltet das Behältnis einen großen Vorrat an Intumeszenmaterial, der sich außerhalb der Durchführungsöffnung befindet und daher die Größe des für die Leitungsbelegung zur Verfügung stehenden Innenquerschnitts der Durchführungsöffnung nicht beeinträchtigt. Erst im Brandfall, jedoch noch vor dem Aufschäumen, gelangt das schütt- oder rieselfähige Intumeszenzmaterial durch den sich öffnenden Boden in die Durchführungsöffnung. Dabei kann die Menge dieses Intumeszenzmaterials unschwer so groß gewählt werden, daß sie nach erfolgter Volumenvergrößerung schon allein zum sicheren Verschluß der Durchführungsöffnung ausreicht, also in der Durchführungsöffnung sich Blöcke aus Intumeszenzmaterial, welche die Wände der Durchführungsöffnung auskleiden und deren für die Belegung mit Leitungen verfügbaren Öffnungsquerschnitt verringern, überhaupt erübrigen. Desweiteren wird der große Vorteil erzielt, daß das schütt- oder rieselfähige Intumeszenzmaterial in alle Zwischenräume zwischen den Leitungen selbst, zwischen diesen und einer sie in der Durchführungsöffnung eventuell aufnehmenden Leitungspritsche, sowie zwischen der Leitungspritsche und den Wänden der Durchführungsöffnung gelangen und diese Zwischenräume alle dicht ausfüllen kann. Daher ist es bei der erfindungsgemäßen Vorrichtung ohne weiteres möglich ist, mit den Leitungen noch eine Leitungspritsche durch die Durchführungsöffnung hindurchlaufen zu lassen, ohne dadurch den wirksamen Brandabschluß der Durchführungsöffnung im Brandfall zu gefährden. Wird dann im übrigen entsprechend einem weiteren Vorschlag der Erfindung dafür gesorgt, daß die Menge des Intumeszenzmaterials im Behältnis so groß ist, daß es bei geöffnetem Boden die Durchführungsöffnung schon vor seiner Volumenvergrößerung bis mindestens zur Höhe des Bodens ausfüllt, so ergibt sich nach dem Öffnen des Bodens ein sich über die ganze Länge der Durchführungsöffnung erstreckender, völlig rauchdichter Verschluß der Durchführungsöffnung, und zwar schon dann, wenn das Intumeszenzmaterial noch gar nicht aufgeschäumt ist. Die auf diese Weise erreichbare Rauchdichtigkeit macht im übrigen die bei den bekannten Vorrichtungen erforderlichen Polystyrol-Kappen entbehrlich, wodurch sich Änderungen der Leitungsbelegung weiter vereinfachen.

Um eine einwandfreie, gleichmäßige und schnelle Überführung des schütt- oder rieselfähigen Intumeszenzmaterials aus dem Behältnis in die Durchführungsöffnung sicher zu stellen, ist erfindungsgemäß weiter vorgesehen, daß der Innenraum des Behältnisses die Gestalt eines aufrechten Prismas besitzt und eine den Prismenquerschnitt ausfüllende, im Innenraum verschiebbar geführte Querplatte aufnimnmt, die auf dem schütt- oder rieselfähigen Intumeszenzmaterial aufliegt und sich beim Öffnen des Bodens mit dem sich absenkenden Intumeszenzmaterial abwärts bewegt. Die Querplatte fördert nicht nur die Überführung des Materials, sondern dichtet zugleich den vom Material frei gewordenen Teil des Behältnisses gegen die Durchführungsöffnung hin ab. Zweckmäßigerweise ist die Querplatte ein aus hartem Brandschutz-Material bestehendes Formteil und steht unter der Wirkung einer abwärts gerichteten Federkraft. Ersteres beschleunigt die Überführung des schütt- oder rieselfähigen Intumeszenzmaterials in die Durchführungsöffnung hinein, während die Ausführung der Querplatte aus Brandschutzmaterial die Brandwiderstandsdauer der Vorrichtung insgesamt weiter vergrößert.

Eine weitere bevorzugte Ausführungsform der Erfindung ist dadurch gekennzeichnet, daß der Schottkasten Stirnwände besitzt, die ihn auf beiden Wandseiten oberhalb der Durchführungsöffnung quer zur Leitungsrichtung begrenzen und nach unten offene Taschen bilden, in welchen senkrecht verschiebbare Schottwände geführt und von einer in Verschiebungsrichtung abwärts wirkenden Antriebskraft beaufschlagt sind, wobei die Schottwände in Verschiebungsrichtung größer sind als die Höhe der Durchführungsöffnung und in den Taschen Abdichtungen zwischen der Schottwand und der Stirnwand vorgesehen sind, und daß für jede Schottwand eine Halteeinrichtung vorgesehen ist, welche die Schottwand in der Tasche festhält und erst im Brandfall zur Verschiebung in die Durchführungsöffnung frei gibt. Die Schottwände bilden in ihrer in die Durchführungsöffnung hinein verschobenen Stellung eine zusätzliche Brandabschottung auf beiden Wandseiten. Sie bestehen ebenfalls aus Brandschutzmaterial und vergrößern dadurch weiter die im Brandfall zum Verschließen der Durchführungsöffnung zur Verfügung stehende Materialmenge, ohne ebenfalls in ihrer in die Taschen zurückgezogenen Stellung den Innenquerschnitt der Durchführungsöffnung zu beeinträchtigen. Ihre Abdichtung gegen die Stirnwände verhindert, daß die Bewegung der Schottwände in die Durchführungsöffnung hinein zu Undichtigkeiten gegenüber den Stirnwänden und dem Schottkasten führt, die mit der Gefahr einer Brandausbreitung unter Umgehung der Schottwände durch das vom schütt- oder rieselfähige Intumeszenzmaterial entleerte Behältnis hindurch verbunden sein könnten.

Vorzugsweise erfolgt die Freigabe der Schottwände vor der Öffnung des Bodens, so daß im Brandfall die schon in die Durchführungsöffnung vorgeschobenen Schottwände verhindern, daß das aus dem Behältnis in die Durchführungsöffnung eintretende Intumeszenzmaerial in Leitungslängsrichtung stirnseitig aus der Durchtrittsöffnung auslaufen und für die Branddämmung verloren gehen kann.

Das Öffnen des Bodens des Behältnisses im Brandfall kann auf verschiedene Weise, beispielsweise durch Zerstören des Bodens, wie Aufreißen, Aufschneiden oder dergl., erfolgen. Um aber das Öffnen des Bodens genau steuern zu können, sieht die Erfindung als bevorzugte Ausführungsform vor, daß der Boden mit über seine gesamte Fläche sieb- oder rasterartig verteilten Austrittsöffnungen für das schütt- und rieselfähige Intumeszenzmaterial versehen und zum Schließen und Öffnen der Austrittsöffnungen ein am Schottkasten parallel zum Boden geführter, aus der Schließstellung in die Offenstellung steuerbarer Verschlußschieber vorgesehen ist. Zweckmäßigerweise ist der in Führungsrichtung aus der Schließstellung in die Offenstellung von einer Stellkraft beaufschlagte Verschlußschieber durch Riegelglieder in der Schließstellung gehalten, die im Brandfall ausgelöst werden und die Bewegung des Verschlußschiebers in die Offenstellung frei geben.

Die Riegelglieder können aus einem in der Wärme schmelzenden Werkstoff bestehen, so daß sie durch ihr Schmelzen die Verschlußschieberverstellung ermöglichen. Eine andere bevorzugte Ausführungsform ist dadurch gekennzeichnet, daß zur Betätigung der Riegelglieder auf Wärme und/oder Rauch ansprechende Stellglieder vorgesehen sind. Diese Stellglieder können auch zur Auslösung der Schottwände Verwendung finden. In diesem Fall betätigen die Stellglieder zusätzliche Riegelglieder, die als Teil der Halteeinrichtungen für die Schottwände diese in den Taschen festhalten. Eine hierfür bevorzugte Ausführungsform ist dadurch gekennzeichnet, daß die Stellglieder erste und zweite Zylinderkolbenanordnungen umfassen, daß bei den ersten Zylinderkolbenanordnungen je ein Zylinderraum mit einem sich in der Wärme stark ausdehnenden Treibmaterial gefüllt ist und der jeweils andere Zylinderraum über ein druckübertragendes Medium mit einem Zylinderraum einer der zweiten Zylinderkolbenanordnungen in Verbindung steht, deren Kolben gegen die Kraft des Mediums durch eine Vorspannfeder abgestützt ist, und daß die Kolben der ersten Zylinderkolbenanordnungen die Riegelglieder für die Schottwände und die Kolben der zweiten Zylinderkolbenanordnungen die Riegelglieder für den Verschlußschieber betätigen, so daß sich die Schottwände im Ergebnis eher verstellen als der Verschlußschieber. Die verschiedenen Zylinderkolbenanordnungen sind zweckmäßigerweise in einem einzigen Zylinderblock ausgebildet, der sich am Schottkasten, vorzugsweise dicht oberhalb der Durchführungsöffnung befindet, so daß er der im Brandfall in der Durchführungsöffnung entstehenden Hitze unmittelbar ausgesetzt ist. Als Treibmaterial kann Aluminiumhydroxid Al(OH)₃ dienen, das sich unter Wärmeeinwirkung in endothermer Reaktion unter Abspalten von Wasser zersetzt und dabei sein Volumen insgesamt wesentlich vergrößert.

Statt aus derartigen Riegelgliedern können die Halteeinrichtungen für die Schottwände aber auch aus am Schottkasten angeordneten elektrisch versorgten Haftmagneten und aus an den Schottwänden angeordneten Haftgegenplatten bestehen, wobei im Versorgungskreis der Haftmagnete ein elektrischer Schalter liegt, der durch auf Wärme und/oder Rauch ansprechenden Brandmelder steuerbar ist. Die Brandmelder können, insbesondere in der Ausführungsform als Rauchmelder, entfernt vom Schottkasten angeordnet und über elektrische Leitungen mit dem elektrischen Schalter verbunden sein, was die Anordnung der Brandmelder an beliebigen, insbesondere auch an besonders gefährdeten Orten der durch die Wand begrenzten Räumlichkeiten ermöglicht. Statt dessen oder auch ergänzend können an den Stirnwänden des Schottkastens Brandmelder angeordnet sein, die einen sich in der Wärme ausdehnenden Stoff enthalten, der durch seine Ausdehnung mechanisch den ebenfalls am Schottkasten angeordneten elektrischen Schalter steuert. Durch Brandmelder gesteuerte Schottwände können in einfacher Weise ihrerseits den Verschlußschieber für den Boden des Behältnisses steuern. Eine dafür besonders bevorzugte Ausführungsform ist dadurch gekennzeichnet, daß eine der Schottwände als Riegelglied für den Verschlußschieber dient, wozu der Verschlußschieber durch einen Anschlag in der Schließstellung gehalten ist, der von der Schottwand gebildet ist und die Bewegung des Verschlußschiebers in die Offenstellung freigibt, wenn sich die Schottwand in die Durchführungsöffnung verstellt. Insbesondere besteht die Möglichkeit, daß der Verschlußschieber in Verschiebungsrichtung durch eine Aussparung in der Seitenwand hindurch unmittelbar an der Schottwand abgestützt ist, und daß in der Schottwand eine Einsenkung vorgesehen ist, in die der Verschlußschieber bei der Abwärtsverstellung der Schottwand so tief eintreten kann, wie es für seine Verstellung in die Offenstellung nötig ist. Auch auf diese Weise ergibt es sich gleichsam von selbst, daß zuerst die Schottwände schließen und erst dann sich der Boden des Behältnisses öffnet.

Um die zur Verfügung stehende Menge an Intumeszenzmaterial zu vergrößern, ohne das Behältnis in der Wandöffnung und damit deren Querschnitt vergrößern zu müssen, kann es sich empfehlen, zusätzlich zum Behältnis außerhalb der Wandöffnung auf einer Seite oder beiden Seiten der Wand ein oder mehrere Zusatzbehältnisse für das Intumeszenzmaterial vorzusehen, die mit dem Behältnis in der Wandöffnung so in Verbindungen stehen, daß das Intumeszenzmaterial aus den Zusatzbehältnissen in das Behältnis nachlaufen und es nachfüllen kann, wenn es sich entleert. Im Behältnis in der Wandöffnung kann dann kein Leerraum entstehen, selbst wenn sich sein ursprünglicher Inhalt mehr oder weniger in die Durchführungsöffnung entleert hat.

In einer weiteren vorteilhaften Ausführungsform der Erfindung sind auf beiden Wandseiten am Schottkasten nach unten in die Durchführungsöffnung hängende Schürzen vorgesehen, die mit dem unteren freien Rand auf den Leitungen liegen, und die die Durchführungsöffnung in Leitungslängsrichtung nach außen abdecken. Diese Schürzen bieten in einfacher Weise Zugfreiheit der Vorrichtung, so lange die Durchtrittsöffnung nicht ausgefüllt ist und die Schottwände sich in ihren Taschen befinden. Zweckmäßigerweise sind die Schürzen im Bereich ihres den Leitungen aufliegenden Randes einwärts in die Durchführungsöffnung hineingebogen, um im Brandfall zu verhindern, daß aus dem Behältnis austretendes schütt- oder rieselfähige Intumeszenzmaerial stirnseitig in Leitungslängsrichtung aus der Durchführungsöffnung auslaufen kann und für die Abschottung verloren geht. Auch empfiehlt es sich, die Schürzen an den Stirnwänden des Schottkastens in Gelenken zu halten, in denen die Schürzen nach außen und aufwärts gegen die Stirnwände verschwenkbar sind, in welcher Stellung sie beispielsweise eingerastet werden können, damit sie nicht stören, während Belegungsarbeiten in der Durchführungsöffnung stattfinden. Die Schürzen bestehen vorteilhafterweise aus Glasvlies, Glasgeweben, oder aus einem Kupferdrahtgewebe, wobei letzteres mit dem Vorteil eines besonders wirksamen Flammenschutzes und rascher Wärmeableitung verbunden ist. Im übrigen können die Schürzen an ihrem unteren Rand Fransen tragen, die zwischen die Leitungen fallen und dadurch die Abdeckung und Zugfreiheit weiter verbessern.

Das schütt- oder rieselfähige Intumeszenzmaterial im Behältnis des Schottkastens kann Sliziumdioxid SiO₂ und eine Beimischung aus Aluminiumhydroxid Al(OH)₃ enthalten. Das Intumeszenzmaterial kann aus mehreren, bei ihrer Mischung miteinander aufschäumenden Stoffkomponenten bestehen, für die im Behältnis voneinander abgeteilte Kammern ausgebildet sind, so daß sich die Stoffkomponenten erst beim Austritt des Intumeszenzmaterials in die Durchführungsöffnung miteinander vermischen können. Die Schottwände, der Boden des Behältnisses, der Verschlußschieber und die Querplatte sind zweckmäßigerweise als harte Formteile aus in der Hitze aufschäumendem Brandschutz-Material ausgebildet. Weiter empfiehlt es sich, daß der Schottkasten einschließlich seiner Stirnwände aus einem Werkstoff auf der Basis von Calciumsilikat besteht. Dabei können die Stirnwände des Schottkastens an der Außenseite mit einem Hitzeschild, insbesondere aus Aluminiumfolie, belegt sein. Im übrigen ist zweckmäßigerweise der Schottkasten gegen die Wand durch zwischen beiden angeordnete elastische Matten aus Brandschutz-Schaumstoff abgedichtet.

Im folgenden wird die Erfindung anhand von in der Zeichnung dargestellten Ausführungsbeispielen näher erläutert; es zeigen:
- Fig. 1: eine Abschottungsvorrichtung in einem senkrechten Schnitt in Leitungslängsrichtung,
- Fig. 2: den Gegenstand der Fig. 1 in einer Vorderansicht,
- Fig. 3: eine andere Ausführungsform der Abschottungsvorrichtung in einer der Fig. 1 entsprechenden Darstellung,
- Fig. 4: eine Stellgliedanordnung zur wärmeabhängigen Steuerung der Vorrichtung nach Fig. 3,
- Fig. 5: eine nochmals andere Ausführungsform einer erfindungsgemäßen Abschottungsvorrichtung, wiederum in einer der Fig. 1 entsprechenden Darstellung.
- Fig. 6: eine Ausführungsform der Abschottungsvorrichtung mit Zusatzbehältnissen für das Intumeszenzmaterial, teilweise geschnitten parallel zur Leitungslängsrichtung.

Die in der Zeichnung dargestellten Vorrichtungen dienen zur Brandabschottung einer Wandöffnung 2 für die Durchführung von Leitungen 1, wie elektrische Kabel, Rohre oder dergl., durch eine Wand 3. Die Vorrichtung umfaßt einen in der Wandöffnung 2 angeordneten Schottkasten 4, zwischen dem und der Wand 3 eine Abdichtung 5 vorgesehen ist. Der Schottkasten 4 ist auf der unteren Laibungsfläche 2.1 der Wandöffnung 2 durch Blöcke 6 aus verfestigter Steinwolle abgestützt, die sich entlang der seitlichen Laibungswände 2.2 der Wandöffnung erstrecken. Zwischen diesen Blöcken 6 bildet der Schottkasten 4 eine Durchführungsöffnung 7 für die Leitungen 1.

Der Schottkasten 4 bildet ein Behältnis 19, das durch teilweise Punktierung 20 angedeutetes Intumeszenzmaterial enthält, das aus einem Feststoff von schütt- oder rieselfähiger Beschaffenheit besteht. Der die Durchführungsöffnung 7 nach oben hin begrenzende Boden 21 dieses Behältnisses 19 öffnet sich im Brandfall und läßt das Intumeszenzmaterial 20 nach unten in die Durchführungsöffnung 7 hin austreten. Es füllt dann die Zwischenräume zwischen den Leitungen 1 untereinander, zwischen den Leitungen 1 und einer sie tragenden Leitungspritsche 17 sowie zwischen der Leitungspritsche und den Laibungsflächen 2.1, 2.2 der Wandöffnung 2, bzw. den Blöcken 6. Die Öffnung des Bodens 21 erfolgt schon bei niedrigerer Temperatur als die im Brandfall unter der Wärmeeinwirkung stattfindende Volumenvergrößerung des Intumeszenzmaterials 20. Die Menge des Intumeszenzmaterials 20 im Behältnis 19 ist dabei so groß, daß das Material bei geöffnetem Boden 21 die Durchführungsöffnung 7 schon vor der Volumenvergrößerung bis mindestens zur Höhe des Bodens 21 ausfüllt, so daß über die ganze Länge der Durchführungsöffnung 7 hinweg eine Rauchabdichtung schon erreicht wird, ehe das Intumeszenzmaterial überhaupt aufschäumt.

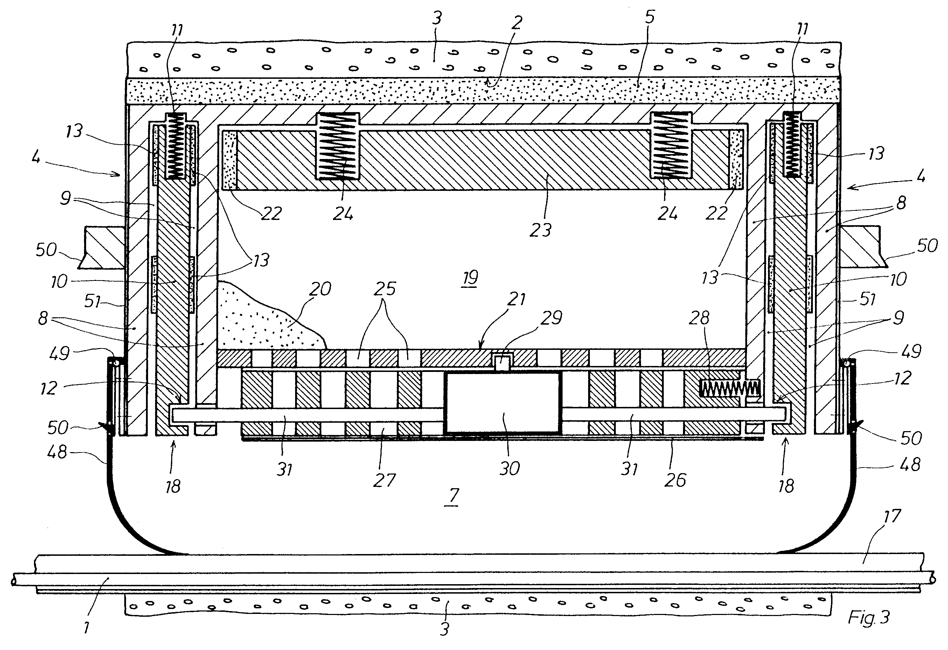

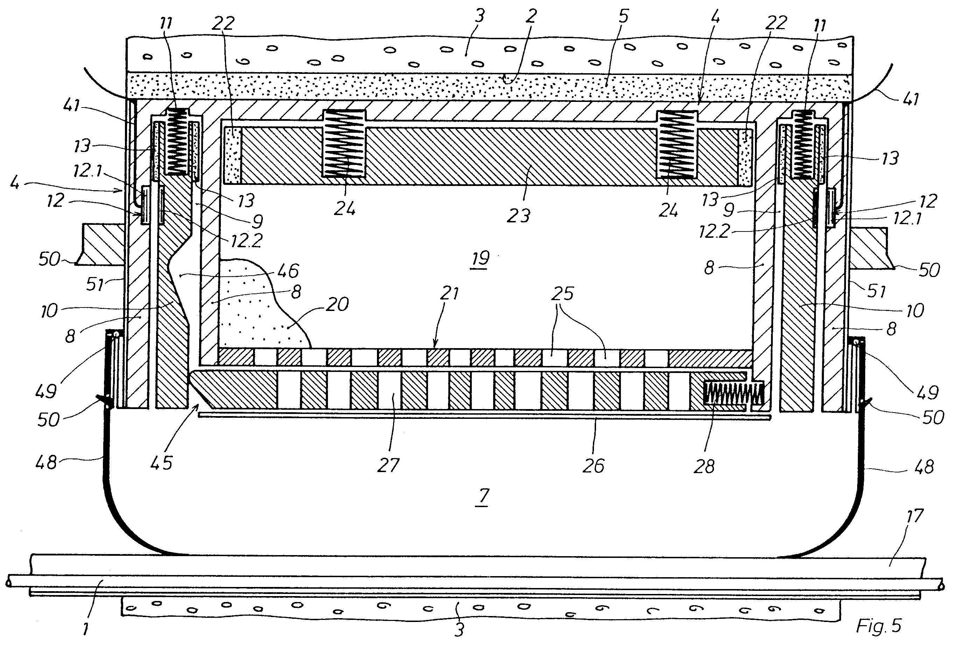

Im Ausführungsbeispiel nach den Fig. 3 und 5 besitzt der Innenraum des Behältnisses 19 die prismatische Gestalt eines Quaders und nimmt eine den Querschnitt des Quaders ausfüllende, gegen die Wand des Innenraums durch einen elastischen Streifen 22 abgedichtete Querplatte 23 auf, die sich unter dem Druck von Federn 24 im Innenraum abwärts verschieben kann, wobei sie auf dem schütt- oder rieselfähigen Intumeszenzmaterials 20 aufliegt und sich beim Öffnen des Bodens 21 mit dem sich dann im Behältnis 19 absenkenden Intumeszenzmaterial abwärts bewegt. Diese Querplatte 23 besteht aus hartem Brandschutzmaterial und sorgt für eine gleichmäßige und schnelle Überführung des Intumeszenzmaterials 20 aus dem Behältnis 19 in die Durchführungsöffnung 7, sowie im Brandfall durch ihre eigene Volumenvergrößerung zur Füllung des Behältnisses 19.

Der Schottkasten 4 besitzt quer zur Leitungsrichtung angeordnete, feststehende und die Durchführungsöffnung 7 unter sich freilassende Stirnwände 8 mit einer nach unten zur Durchführungsöffnung 7 hin offenen Tasche 9, in der als Formteil aus Intumeszenzmaterial ausgebildete Schottwände 10 senkrecht verschiebbar in die Durchführungsöffnung 7 geführt sind, wobei die Schottwände ergänzend zu ihrem eigenen Gewicht von in Führungsrichtung auf sie einwirkenden, für ihre Verschiebung eine zusätzliche Antriebskraft erzeugenden Federn 11 beaufschlagt sind. Für jede Schottwand 10 ist eine allgemein mit 12 bezeichnete Halteeinrichtung vorgesehen, welche die Schottwand 10 gegen die Wirkung der Antriebskraft in der Tasche 9 festhält und erst im Brandfall ihre Bewegung aus der Tasche in die Durchführungsöffnung 7 freigibt. Diese Freigabe der Schottwände 10 erfolgt bei niedrigerer Temperatur als die Volumenvergrößerung des Intumeszenzmaterials, so daß letzteres erst stattfinden kann, wenn sich die Schottwände 10 vollständig in die Durchführungsöffnung 7 hinein verstellt haben. Die Schottwände 10 sind mit Abdichtungen 13 versehen, die sie in den Taschen gegen die Stirnwände 8 abdichten. Im übrigen sind die Schottwände 10 in Bezug auf die Höhe der Durchführungsöffnung 7 so groß, daß die Schottwände 10 auch in ihrer Endstellung, in der sie am weitesten in die Durchführungsöffnung 7 hinein vorstehen, sich in den Taschen 9 noch mit den Stirnwänden 8 teilweise überlappen, wobei die Abdichtungen 13 sich dann in diesem Überlappungsbereich befinden. Diese Abdichtungen 13 verhindern, daß sich bei in die Durchführungsöffnung 7 hinein vorverstellten Schottwänden 10 Undichtigkeiten in den Taschen 9 auf einem Wege um die Schottwände herum ergeben können. Die Freigabe der Schottwände 10 erfolgt vor der Öffnung des Bodens 27, so daß die Durchführungsöffnung 7 stirnseitig durch die Schottwände 10 bereits geschlossen ist, wenn sie aus dem Behältnis 19 mit dem darin enthaltenen schütt- oder rieselfähigen Intumeszenzmaterial 20 aufgefüllt wird.

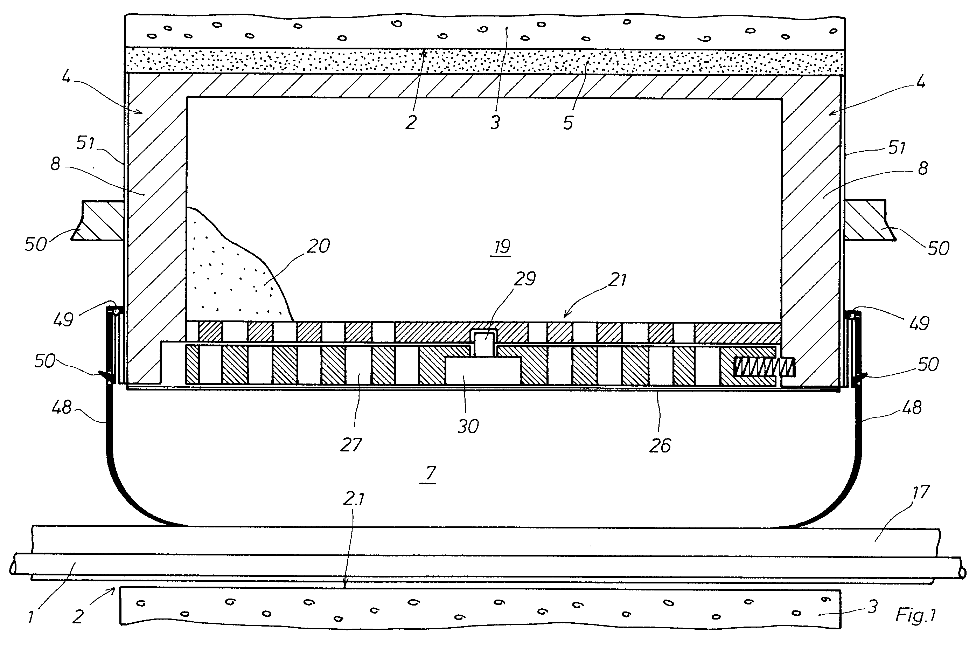

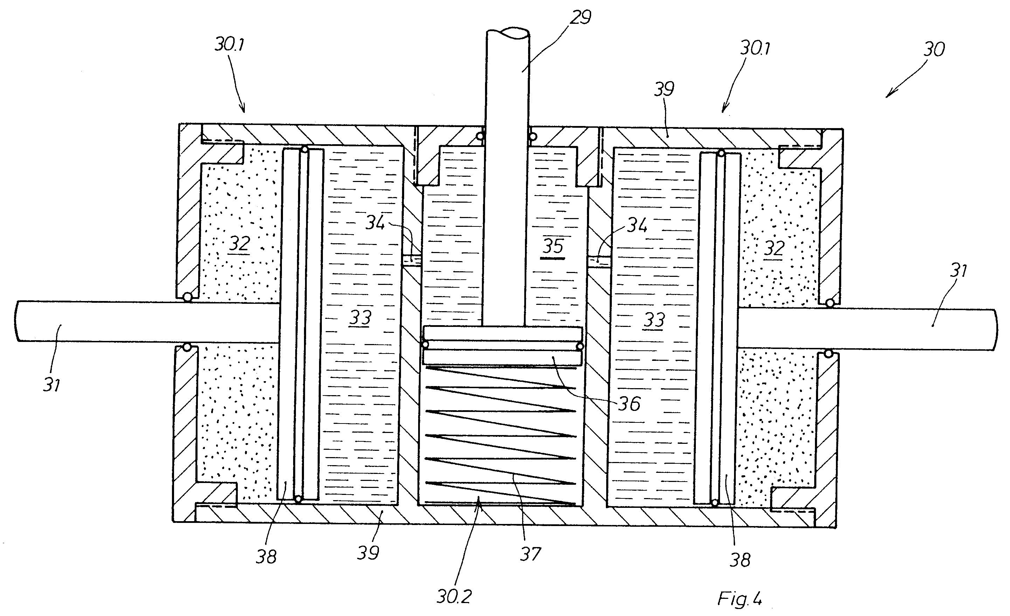

Der Boden 21 ist über seine gesamte Fläche mit sieb- oder rasterartig angeordneten Austrittsöffnungen 25 für das schütt- oder rieselfähige Intumeszenzmaterial 20 versehen. Zum Öffnen und Schließen dieser Austrittsöffnungen 25 dient ein am Schottkasten 4 in Schienen 26 parallel zum Boden 21 geführter, aus der Schließstellung in die Offenstellung steuerbarer Verschlußschieber 27. Der in Führungsrichtung aus der Schließstellung in die Offenstellung von einer Stellkraft, nämlich einer Feder 28, beaufschlagte Verschlußschieber 27 ist in den Fig. 1 und 3 durch Riegelglieder 29 in der Schließstellung gehalten. Diese Riegelglieder 29 lösen im Brandfall aus und geben die Bewegung des Verschlußschiebers 27 in die Offenstellung frei. Zur Betätigung der Riegelglieder 29 sind auf Wärme ansprechende Stellglieder 30 vorgesehen. Diese Stellglieder 30 betätigen im Fall der Fig. 3 zusätzliche Riegelglieder 31, die als Teil der Halteeinrichtung 12 für die Schottwände 10 diese in den Taschen 9 festhalten. In Fig. 4 sind die Stellglieder 30 für sich in einem Schnitt dargestellt. Sie umfassen erste und zweite Zylinderkolbenanordnungen 30.1, 30.2. Bei den ersten Zylinderkolbenanordnungen 30.1 ist je ein Zylinderraum 32 mit einem sich in der Wärme stark ausdehnenden Treibmaterial, beispielsweise Aluminiumhydroxid, gefüllt. Der jeweils andere Zylinderraum 33 enthält ein druckübertragendes, insbesondere hydraulisches Medium und ist über dieses Medium durch Öffnungen 34 mit einem Zylinderraum 35 der zweiten Zylinderkolbenanordnung 30.2 verbunden. Deren Kolben 36 ist gegen die Kraft des Mediums durch eine Vorspannfeder 37 abgestützt. Die Kolben 38 der ersten Zylinderkolbenanordnung 30.1 betätigen die Riegelglieder 31 für die Schottwände 10, der Kolben 36 der zweiten Zylinderkolbenanordnung 30.2 die Riegelglieder 29 für den Verschlußschieber 27. Erfährt das Treibmaterial unter Wärmeeinwirkung Volumenvergrößerungen, bewegen sich die Kolben 38 der ersten Zylinderkolbenanordnungen 30.1 in Richtung gegen die zwischen ihnen angeordnete zweite Zylinderkolbenanordnung 30.2, wobei das druckübertragende Medium durch die Öffnungen 34 in den Zylinderraum 35 der zweiten Zylinderkolbenanorndung 30.2 strömt und deren Kolben 36 in der Darstellung nach Fig. 4 gegen die Kraft der Vorspannfeder 37 abwärts bewegt. Im Ergebnis lösen sich durch die Verstellung der Kolben 38 der ersten Zylinderkolbenanordnungen 30.1 zuerst die Riegelglieder 31 aus ihrem Eingriff an den Schottwänden 10 und anschließend durch die Verstellung des Kolbens 36 der zweiten Zylinderkolbenanordnung 30.2 das Riegelglied 29 aus seinem Eingriff am Boden 21 des Behältnisses 19, so daß sich der Verschlußschieber 27 in die Offenstellung verschieben kann. Ersichtlich sind alle Zylinderkolbenanordnungen 30.1, 30.2 in einem gemeinsamen Zylinderblock 39 ausgebildet, der im Ausführungsbeispiel sich im Verschlußschieber 27 über der Durchführungsöffnung 7 befindet, so daß er der im Brandfall in der Durchführungsöffnung 7 entstehenden Hitze unmittelbar ausgesetzt ist.

In Fig. 1 dagegen ist schematisch der Fall dargestellt, daß die Riegelglieder 29 mit den Stellgliedern 30 ein einziges Bauteil bilden, das aus einem in der Wärme schmelzenden Werkstoff besteht und im Brandfall durch sein Schmelzen die Verstellung des Verschlußschiebers 27 freigibt.

Im Ausführungsbeispiel nach Fig. 5 bestehen die Halteeinrichtungen 12 für die Schottwände 10 aus am Schottkasten 4 angeordneten, auf elektrischem Wege betriebenen Haftmagneten 12.1 und aus an den Schottwänden 10 angeordneten Haftgegenplatten 12.2. So lange die Haftmagnete 12.1 mit Strom versorgt werden, halten sie die Haftgegenplatten 12.2 und damit die Schottwände 10 fest. Im elektrischen Versorgungskreis 41 der Haftmagnete 12.1 liegt ein in der Zeichnung nicht dargestellter elektrischer Schalter, der durch auf Wärme und/oder Rauch ansprechende Brandmelder gesteuert werden kann und der bei seiner Betätigung die elektrische Versorgung der Haftmagnete 12.1 unterbricht, so daß die Haftmagnete 12.1 die Haftgegenplatten 12.2 freigeben und die Schottwände 10 aus den Taschen in die Durchführungsöffnungen 7 gelangen können. Die Brandmelder, insbesondere in der Ausführungsform als Rauchmelder, können entfernt vom Schottkasten 4 angeordnet und über elektrische Leitungen mit dem elektrischen Schalter verbunden sein. Zusätzlich zu solchen Brandmeldern oder statt dessen können auch unmittelbar an den Stirnwänden 8 des Schottkastens 4 angeordnete Brandmelder vorgesehen werden, die einen sich in der Wärme ausdehnenden Stoff enthalten können, der durch seine Ausdehnung mechanisch den ebenfalls am Schottkasten 4 angeordneten elektrischen Schalter steuert, wozu diese Brandmelder mit dem elektrischen Schalter in im einzelnen ebenfalls nicht näher dargestellter Weise durch Ausdehnungsleitungen oder Schaltgestänge verbunden sein können. Die über Brandmelder gesteuerten Schottwände 10 dienen ihrerseits unmittelbar auch zur Steuerung des Verschlußschiebers 27. Dazu dient die in Fig. 5 auf der linken Seite dargestellte Schottwand 10 als Anschlag für den Verschlußschieber 27, der durch eine Aussparung 45 in der Seitenwand 8 hindurch unmittelbar an der Schottwand 10 abgestützt ist. In der Schottwand 10 ist eine Einsenkung 46 vorgesehen, in die der Verschlußschieber 27 bei der Abwärtsverstellung der Schottwand 10 so tief eintreten kann, daß er sich aus der Schließstellung nach links in die Offenstellung verschieben kann, wenn die Schottwände 10 die Durchführungsöffnung 7 stirnseitig geschlossen haben.

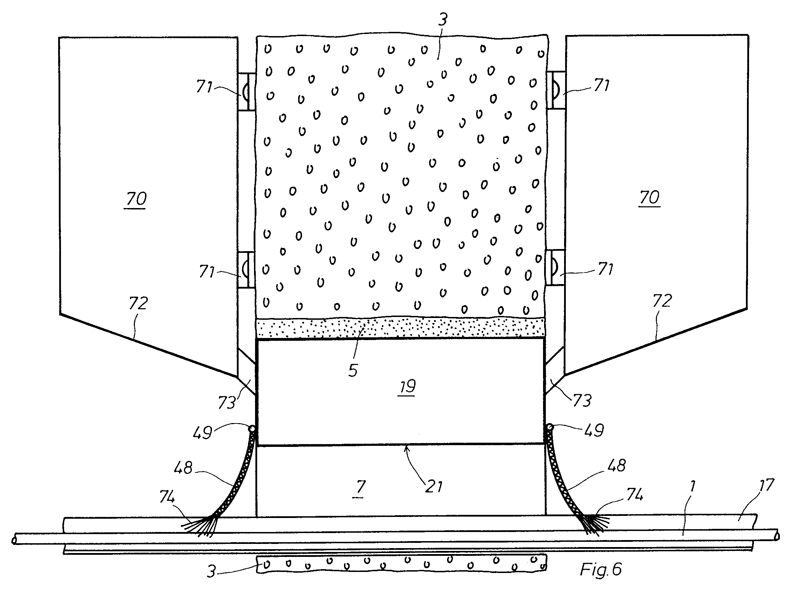

Im Ausführungsbeispiel nach Fig. 6 sind zusätzlich zum Behältnis 19 auf beiden Seiten der Wand 3 außerhalb der Wandöffnung 2 Zusatzbehältnisse 70 angeordnet, die weiteres Intumeszenzmaterial enthalten und so mit dem Behältnis 19 in der Wandöffnung 2 in Verbindung stehen, daß das Intumeszenzmaterial aus den Zusatzbehältnissen 70 in das Behältnis 19 nachlaufen kann, wenn sich dessen Boden 21 öffnet und das ursprünglich im Behältnis 19 enthaltene Intumeszenzmaterial in die Durchführungsöffnung 7 austritt. Das dabei frei werdende Volumen des Behältnisses 19 wird durch das aus den Zusatzbehältnissen nachlaufende Intumeszenzmaterial wieder geschlossen, so daß im Schottkasten 4 überhaupt kein Leerraum entstehen kann. Das Nachlaufen des Intumeszenzmaterials aus den Zusatzbehältnissen 70 in das Behältnis 19 erfolgt im Ausführungsbeispiel allein unter der Einwirkung der Schwerkraft. Dazu sind die Zusatzbehältnisse 70 und Wandhaltern 71 oberhalb des Behältnis 19 angebracht. Über schräg zum Behältnis 19 abwärts geneigte Böden 72 und entsprechend schräg abwärts geneigte Verbindungskanäle 73 rutscht das Intumeszenzmaterial auf den Böden 72 und durch die Verbindungskanäle 73 abwärts in das Behältnis 19, wenn dieses sich zu entleeren beginnt.

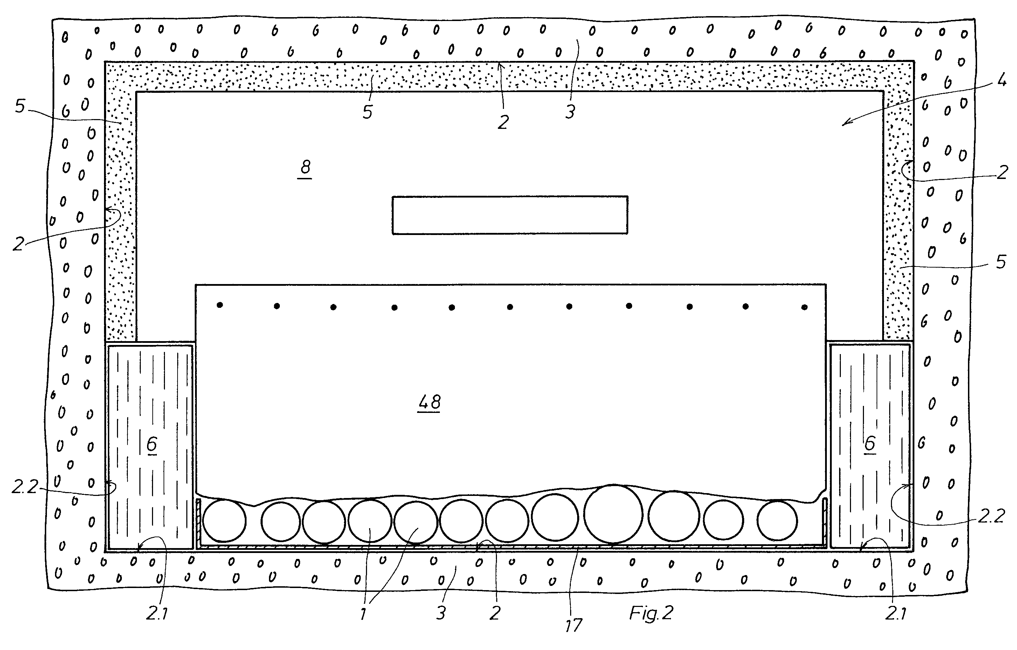

Auf beiden Seiten der Wand sind am Schottkasten 4 nach unten in die Durchführungsöffnung 7 hängende Schürzen 48 aus Glasvlies, Glasgewebe oder aus einem Kupferdrahtgewebe vorgesehen. Sie liegen mit dem unteren freien Rand auf den Leitungen 1 auf und können dort mit lediglich in Fig. 6 angedeuteten Fransen 74 versehen sein, die zwischen die Leitungen 1 fallen. In jedem Fall dienen die Schürzen 48 dazu, die Durchführungsöffnungen 7 in Leitungslängsrichtung nach außen zugdicht abzudecken. Die Schürzen 48 können, wie in den Fig. 1 bis 5, im Bereich ihres den Leitungen 1 aufliegenden Randes in Leitungsrichtung einwärts in die Durchführungsöffnung 7 hinein gebogen sein. Durch die einwärts gerichtete Biegung der Schürzen 48 wird, beispielsweise im Fall fehlender Schottwände 10, ebenfalls verhindert, daß im Brandfall in die Durchführungsöffnung 7 aus dem Behältnis 19 gelangendes schütt- oder rieselfähiges Intumeszenzmaterial stirnseitig in Leitungslängsrichtung aus der Durchführungsöffnung 7 auslaufen kann und für die Abschottung der Durchführungsöffnung verloren geht. An den Stirnwänden 8 des Schottkastens 4 sind die Schürzen 48 in Gelenken 49 gehalten, in denen sie nach außen und oben gegen die Stirnwände 8 verschwenkbar sind. In der hochgeschwenkten Stellung können die Schürzen 48 durch gemeinsam einen Rastsitz bildende Halteteile 50 fixiert werden, so daß sie nicht stören, wenn in der Durchführungsöffnung 7 Leitungsarbeiten vorgenommen werden.

Im einzelnen enthält das schütt- oder rieselfähige Intumeszenzmaterial 20 im Behältnis 19 des Schottkastens 4 Siliziumdioxid SiO₂ mit einer Zumischung aus Aluminiumhydroxid Al(OH)₃. Die Schottwände 10, der Boden 21 des Behältnisses 19, der Verschlußschieber 27 und die Querplatte 23 sind als harte Formteile aus ebenfalls in der Hitze aufschäumendem Brandschutzmaterial ausgebildet. Der Schottkasten 4 besteht einschließlich der Stirnwände 8 aus einem Werkstoff auf der Basis von Calciumsilikat, wobei die Stirnwände 8 an der Außenseite mit einem Hitzeschild 51, insbesondere aus Aluminiumfolie, belegt sind. Die Abdichtung 5 des Schottkastens 4 gegen die Wand 3 erfolgt durch elastische Matten aus Brandschutz-Schaumstoff.

## Patentansprüche

1. Vorrichtung zur Brandabschottung einer Wandöffnung (2) für die Durchführung von Leitungen (1), wie elektrische Kabel, Rohre oder dergl., durch eine Wand (3), mit einem abgedichtet gegen die Wand in der Wandöffnung (2) angeordneten, die Leitungen (1) in einer Durchführungsöffnung (7) aufnehmenden Schottkasten (4), in dem sich ein Intumeszenzmaterial befindet, das die Durchführungsöffnung (7) erst im Brandfall ausfüllt und dabei sein ursprüngliches Volumen infolge von Wärmeeinwirkung entsprechend vergrößert, dadurch gekennzeichnet, daß der Schottkasten (4) ein oberhalb der Durchführungsöffnung (7) angeordnetes Behältnis (19) bildet, welches aus Feststoff bestehendes Intumeszenzmaterial (20) von schütt- oder rieselfähiger Beschaffenheit enthält, und daß der die Durchführungsöffnung (7) nach oben begrenzende Boden (21) des Behältnisses (19) sich im Brandfall öffnet und das Intumeszenzmaterial (20) in die Durchführungsöffnung (7) austreten läßt, wobei die Öffnung des Bodens (21) schon bei niedrigerer Temperatur als die Volumenvergrößerung des Intumeszenzmaterials (20) erfolgt.

2. Vorrichtung nach Anspruch 1, dadurch gekennzeichnet, daß die Menge des Intumeszenzmaterials (20) im Behältnis (19) so groß ist, daß es bei geöffnetem Boden (21) die Durchführungsöffnung (7) schon vor seiner Volumenvergrößerung bis mindestens zur Höhe des Bodens (21) ausfüllt.

3. Vorrichtung nach Anspruch 1 oder 2, dadurch gekennzeichnet, daß der Innenraum des Behältnisses (19) die Gestalt eines aufrechten Prismas besitzt und eine den Prismenquerschnitt ausfüllende, im Innenraum verschiebbar geführte Querplatte (23) aufnimmt, die auf dem schütt- oder rieselfähigen Intumeszenzmaterial (20) aufliegt und sich beim Öffnen des Bodens (21) mit dem sich absenkenden Intumeszenzmaterial (20) abwärts bewegt.

4. Vorrichtung nach Anspruch 3, dadurch gekennzeichnet, daß die Querplatte (23) ein aus hartem Brandschutz-Material bestehendes Formteil ist und unter der Wirkung einer abwärts gerichteten Federkraft (24) steht.

5. Vorrichtung nach einem der Ansprüche 1 bis 4, dadurch gekennzeichnet, daß der Schottkasten (4) Stirnwände (8) besitzt, die ihn auf beiden Wandseiten oberhalb der Durchführungsöffnung (7) quer zur Leitungsrichtung begrenzen und nach unten offene Taschen (9) bilden, in welchen senkrecht verschiebbare Schottwände (10) geführt und von einer in Verschiebungsrichtung abwärts wirkenden Antriebskraft beaufschlagt sind, wobei die Schottwände (10) in Verschiebungsrichtung größer sind als die Höhe der Durchführungsöffnung (7) und in den Taschen (9) Abdichtungen (13) zwischen der Schottwand (10) und der Stirnwand (8) vorgesehen sind, und daß für jede Schottwand (10) eine Halteeinrichtung (12) vorgesehen ist, welche die Schottwand (10) in der Tasche (9) festhält und erst im Brandfall zur Verschiebung in die Durchführungsöffnung (7) freigibt.

6. Vorrichtung nach Anspruch 5, dadurch gekennzeichnet, daß die Freigabe der Schottwände (10) vor der Öffnung des Bodens (2) erfolgt.

7. Vorrichtung nach einem der Ansprüche 1 bis 6, dadurch gekennzeichnet, daß der Boden (21) mit über seine gesamte Fläche sieb- oder rasterartig verteilten Austrittsöffnungen (25) für das schütt- und rieselfähige Intumeszenzmaterial (20) versehen und zum Schließen und Öffnen der Austrittsöffnungen (25) ein am Schottkasten (4) parallel zum Boden (21) geführter, aus der Schließstellung in die Offenstellung steuerbarer Verschlußschieber (27) vorgesehen ist.

8. Vorrichtung nach Anspruch 7, dadurch gekennzeichnet, daß der in Führungsrichtung aus der Schließstellung in die Offenstellung von einer Stellkraft (28) beaufschlagte Verschlußschieber (27) durch Riegelglieder (29) in der Schließstellung gehalten ist, die im Brandfall ausgelöst werden und die Bewegung des Verschlußschiebers (27) in die Offenstellung freigeben.

9. Vorrichtung nach Anspruch 8, dadurch gekennzeichnet, daß die Riegelglieder (29) aus einem in der Wärme schmelzenden Werkstoff bestehen.

10. Vorrichtung nach Anspruch 8, dadurch gekennzeichnet, daß zur Betätigung der Riegelglieder (29) auf Wärme und/oder Rauch ansprechende Stellglieder (30) vorgesehen sind.

11. Vorrichtung nach Anspruch 8, dadurch gekennzeichnet, daß die Stellglieder (30) zusätzliche Riegelglieder (31) betätigen, die als Teil der Halteeinrichtungen (12) für die Schottwände (10) diese in den Taschen (9) festhalten.

12. Vorrichtung nach Anspruch 11, dadurch gekennzeichnet, daß die Stellglieder (30) erste und zweite Zylinderkolbenanordnungen (30.1, 30.2) umfassen, daß bei den ersten Zylinderkolbenanordnungen (30.1) je ein Zylinderraum (32) mit einem sich in der Wärme stark ausdehnenden Treibmaterial gefüllt ist und der jeweils andere Zylinderraum (33) über ein druckübertragendes Medium mit einem Zylinderraum (35) einer der zweiten Zylinderkolbenanorndungen (30.2) in Verbindung steht, deren Kolben (36) gegen die Kraft des Mediums durch eine Vorspannfeder (37) abgestützt ist, und daß die Kolben (38) der ersten Zylinderkolbenanordnungen (30.1) die Riegelglieder (31) für die Schottwände (10) und die Kolben (36) der zweiten Zylinderkolbenanordnungen (30.2) die Riegelglieder (29) für den Veschlußschieber (27) betätigen.

13. Vorrichtung nach einem der Ansprüche 5 bis 10, dadurch gekennzeichnet, daß die Halteeinrichtungen (12) aus am Schottkasten (4) angeordneten, elektrisch versorgten Haftmagneten (12.1) und aus an den Schottwänden (10) angeodneten Haftgegenplatten (12.2) bestehen, wobei im Versorgungskreis der Haftmagnete (12.1) ein elektrischer Schalter liegt, der durch auf Wärme und/oder Rauch ansprechende Brandmelder steuerbar ist.

14. Vorrichtung nach Anspruch 13, dadurch gekennzeichnet, daß die Brandmelder, insbesondere in der Ausführungsform als Rauchmelder, entfernt vom Schottkasten (4) angeordnet und über elektrische Leitungen mit dem elektrischen Schalter verbunden sind.

15. Vorrichtung nach Anspruch 13 oder 14, dadurch gekennzeichnet,daß an den Stirnwänden (8) des Schottkastens (4) Brandmelder angeordnet sind, die einen sich in der Wärme ausdehnenden Stoff enthalten, der durch seine Ausdehnung mechanisch den ebenfalls am Schottkasten angeordneten elektrischen Schalter steuert.

16. Vorrichtung nach Anspruch 8 und einem der Ansprüche 13 bis 15, dadurch gekennzeichnet, daß eine der Schottwände (10) als Riegelglied für den Verschlußschieber (27) dient, wozu der Verschlußschieber (27) durch einen Anschlag in der Schließstellung gehalten ist, der von der Schottwand (10) gebildet ist und die Bewegung des Verschlußschiebers (27) in die Offenstellung freigibt, wenn sich die Schottwand (10) in die Durchführungsöffnung (7) verstellt.

17. Vorrichtung nach Anspruch 16, dadurch gekennzeichnet, daß der Verschlußschieber (27) in Verschiebungsrichtung durch eine Aussparung (45) in der Seitenwand (8) hindurch unmittelbar an der Schottwand (10) abgestützt ist, und daß in der Schottwand (10) eine Einsenkung (46) vorgesehen ist, in die der Verschlußschieber (27) bei der Abwärtsverstellung der Schottwand (10) so tief eintreten kann, wie es für seine Verstellung in die Offenstellung nötig ist.

18. Vorrichtung nach einem der Ansprüche 1 bis 17, dadurch gekennzeichnet, daß zusätzlich zum Behältnis (19) außerhalb der Wandöffnung (2) auf einer Seite oder beiden Seiten der Wand (3) Zusatzbehältnisse (70) für das Intumeszenzmaterial vorgesehen sind, die mit dem Behältnis (19) so in Verbindung stehen, daß das Intumeszenzmaterial aus den Zusatzbehältnissen (70) in das Behältnis (19) nachlaufen kann, wenn sich letzteres entleert.

19. Vorrichtung nach einem der Ansprüche 1 bis 18, dadurch gekennzeichnet, daß auf beiden Wandseiten am Schottkasten (4) nach unten in die Durchführungsöffnung (7) hängende Schürzen (48) vorgesehen sind, die mit dem unteren freien Rand auf den Leitungen (1) liegen, und die die Durchführungsöffnung (7) in Leitungsrichtung nach außen abdecken.

20. Vorrichtung nach Anspruch 19, dadurch gekennzeichnet, daß die Schürzen (48) im Bereich ihres den Leitungen (1) aufliegenden Randes einwärts in die Durchführungsöffnung (7) hinein gebogen sind.

21. Vorrichtung nach Anspruch 19 oder 20, dadurch gekennzeichnet, daß die Schürzen (48) an den Stirnwänden (8) des Schottkastens (4) in Gelenken (49) gehalten sind, in denen die Schürzen (48) nach außen und aufwärts gegen die Stirnwände (8) verschwenkbar sind.

22. Vorrichtung nach einem der Ansprüche 19 bis 21, dadurch gekennzeichnet, daß die Schürzen (48) aus einem Glasvlies oder Glasgewebe bestehen.

23. Vorrichtung nach einem der Ansprüche 19 bis 21, dadurch gekennzeichnet, daß die Schürzen (48) aus einem Kupferdrahtgewebe bestehen.

24. Vorrichtung nach Anspruch 22 oder 23, dadurch gekennzeichnet, daß die Schürzen (48) an ihrem unteren Rande zwischen die Leitungen (1) fallende Fransen (74) tragen.

25. Vorrichtung nach einem der Ansprüche 1 bis 24, dadurch gekennzeichnet, daß das schütt- oder rieselfähige Intumeszenzmaterial (20) im Behältnis (19) des Schottkastens (4) Siliziumdioxid SiO₂ und eine Beimischung aus Aluminiumhydroxid Al/OH)₃ enthält.

26. Vorrichtung nach Anspruch 25, dadurch gekennzeichnet, daß das Intumeszenzmaterial aus mehreren, bei ihrer Mischung miteinander aufschäumenden Stoffkomponenten besteht und im Behältnis (19) für die einzelnen Stoffkomponenten voneinander abgeteilte Kammern ausgebildet sind.

27. Vorrichtung nach einem der Ansprüche 1 bis 26, dadurch gekennzeichnet, daß die Schottwände (10), der Boden (21) des Behältnisses (19), der Verschlußschieber (27) und die Querplatte (23) als harte Formteile aus in der Hitze aufschäumendem Brandschutz-Material ausgebildet sind.

28. Vorrichtung nach einem der Ansprüche 1 bis 27, dadurch gekennzeichnet, daß der Schottkasten (4) einschließlich seiner Stirnwände (8) aus einem Werkstoff auf der Basis von Calciumsilikat besteht.

29. Vorrichtung nach einem der Ansprüche 1 bis 28, dadurch gekennzeichnet, daß die Stirnwände (8) des Schottkastens (4) an der Außenseite mit einem Hitzeschild (51), insbesondere aus Aluminiumfolie, belegt sind.

30. Vorrichtung nach einem der Ansprüche 1 bis 29, dadurch gekennzeichnet, daß der Schottkasten (4) gegen die Wand (2) durch zwischen beiden angeordnete elastische Matten (5) aus Brandschutz-Schaumstoff abgedichtet sind.
